(19) Europäisches Patentamt
European Patent Office
Office européen des brevets

(11) Numéro de publication : **0 194 166 B1**

(12) # FASCICULE DE BREVET EUROPEEN

(45) Date de publication du fascicule du brevet : **03.04.91 Bulletin 91/14**

(51) Int. Cl.$^5$ : **H04N 5/265**, H04N 9/76

(21) Numéro de dépôt : **86400113.6**

(22) Date de dépôt : **21.01.86**

(54) **Système de surimpression d'images.**

(30) Priorité : **28.01.85 FR 8501133**

(43) Date de publication de la demande : **10.09.86 Bulletin 86/37**

(45) Mention de la délivrance du brevet : **03.04.91 Bulletin 91/14**

(84) Etats contractants désignés : **DE GB IT**

(56) Documents cités : **GB-A- 1 416 689**

(73) Titulaire : **Etablissement Public TELEDIFFUSION DE FRANCE**
**10, rue d'Oradour-sur-Glane**
**F-75732 Paris Cédex 15 (FR)**

(72) Inventeur : **Macheboeuf, Guy**
**Val d'Haumont 37, allée des Pins**
**F-27130 Pullay par Verneuil sur Avre (FR)**

(74) Mandataire : **Martinet & Lapoux**
**62, rue des Mathurins**
**F-75008 Paris (FR)**

**EP 0 194 166 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un système pour obtenir un effet de surimpression d'images à partir de l'addition de deux signaux d'image fournis par deux sources vidéos telles que caméras vidéos ou magnétoscopes par exemple.

Actuellement, un effet de surimpression en télévision en noir et blanc ou en couleurs est obtenu au moyen de deux amplificateurs à gain variable recevant respectivement les deux signaux d'image et ayant des commandes de gain complètement indépendantes, produites en général par des résistances réglables, tels que deux potentiomètres. Un circuit d'addition mélange les deux signaux d'image amplifiés en un signal résultant.

Le réglage séparé des potentiomètres offre un risque de dépassement de l'amplitude crête normalisée dans le signal résultant. Le dépassement nécessite un écrêtage du signal résultant et conduit ainsi à des défauts dans l'image représentée par le signal résultant, tels que pertes de demi-teinte de l'image de scène sur laquelle est superposée l'autre image représentant par exemple un fantôme, un voile ou un rideau de pluie, ou perte de détails de l'image de scène. Ces défauts sont d'autant plus prononcés que l'amplitude du signal représentatif de l'une des deux images est proche du niveau blanc correspondant à l'amplitude maximale. Par contre, lorsque l'amplitude du signal représentatif de l'une des deux images est proche du niveau noir, le bruit et autres parasites, telles que tâches, polluent le signal résultant.

Le but de l'invention est de remédier aux défauts ci-dessus en commandant les gains des amplificateurs par un unique signal de commande de gain permettant de maintenir l'amplitude du signal résultant dans l'intervalle normalisé des amplitudes des signaux d'image, quelque soit l'effet de surimpression recherché.

A cette fin, un système de surimpression d'images selon l'invention est tel que défini dans la revendication 1.

Il est à noter que, selon l'invention, le signal de commande de gain est obtenu à partir des deux signaux d'image et non à partir de l'un de ces signaux, comme dans des systèmes d'incrustation d'images en télévision en couleurs (GB-A-1 416 689).

En pratique, les deux signaux d'image entrant dans le système peuvent être deux groupes de trois signaux de couleur primaire, ou deux groupes incluant chacun un signal de luminance et deux signaux de différence de couleur, ou deux signaux vidéo codés selon le standard de télévision NTSC, PAL ou SECAM.

Selon une autre caractéristique de l'invention, les moyens pour établir comprennent des moyens définis dans la revendication 2. Des paramètres, tels que décalage du niveau noir et gain d'amplification, pour chacun des signaux d'image permettent de régler définitivement l'effet de la surimpression pour une séquence d'images déterminées. En outre, le signal de commande de gain ne dépend automatiquement que de l'un des signaux d'image grâce aux moyens pour sélectionner, afin que ce seul signal soit transmis lorsque son amplitude est proche du niveau blanc. Cependant, l'effet de la surimpression est augmenté en choisissant des gains opposés et, en valeur absolue, nettement différents.

Selon une autre caractéristique de l'invention, les moyens pour établir comprennent des moyens pour atténuer l'un desdits signaux issus, de préférence correspondant à l'image à superposer, par un facteur d'atténuation ajustable par un opérateur, en un signal atténué appliqué aux moyens respectifs pour décaler puis amplifier. L'ajustement du facteur d'atténuation contribue à affiner l'effet de surimpression.

D'autres avantages et caractéristiques de l'invention apparaîtront plus clairement à la lecture de la description suivante de plusieurs réalisations préférées de l'invention en référence aux dessins annexés correspondants dans lesquels :

- les Figs. 1A, 1B, 1C et 1D sont des blocs-diagrammes de systèmes de surimpression d'images selon l'invention, adaptés à la forme des signaux d'image entrants ;
- la Fig. 2 est un diagramme d'images à combiner pour obtenir des surimpressions ;
- la Fig. 3 est un bloc-diagramme d'un circuit de commande de gain inclus dans tous les sytèmes d'incrustation selon l'invention ;
- les Figs. 4A et 4B montrent en détail le circuit de commande de gain ; et
- les Figs. 5 et 6 sont des diagrammes temporels montrant des variations d'amplitude de tension de signaux produits dans le circuit de commande de gain.

Comme cela apparaît en comparant les Figs. 1A à 1D, un système de surimpression d'images 1a, 1b, 1c ou 1d selon l'invention comprend un, ou deux, ou trois mélangeurs, dits également combineurs, mélangeant chacun deux signaux vidéos transmis en parallèle, et un circuit de commande de gain 12, objet principal de l'invention. Le choix du système de surimpression dépend de la nature des signaux représentant deux images de télévision en couleurs $I_1$ et $I_2$.

Lorsque les images $I_1$ et $I_2$ sont représentées par trois signaux primaires respectifs $R_1$, $V_1$, $B_1$ et $R_2$, $V_2$, $B_2$ transmis en parallèle, relatifs aux couleurs rouge, verte et bleue, un système de surimpression d'images la montré à la Fig. 1A comprend deux matrices vidéos $M_1$ et $M_2$, trois mélangeurs 11R, 11V et 11B et le circuit de commande de gain 12. Les matrices $M_1$ et $M_2$ reçoivent via des entrées $10R_1$, $10V_1$, $10B_1$ et $10R_2$, $10V_2$, $10B_2$ et combinent respectivement les signaux primaires $R_1$, $V_1$ et $B_1$ représentant la première image $I_1$ et les signaux primaires $R_2$, $V_2$ et $B_2$ représentant

la seconde image $I_2$ pour produire des signaux vidéos composites $SC_1$ et $SC_2$ à des entrées 121 et 122 du circuit 12. La surimpression est effectuée séparément pour chaque couleur primaire dans un mélangeur respectif 11R, 11V, 11B sous la commande d'un unique signal de commande αa produit par une sortie 123 du circuit 12.

Chaque mélangeur 11R, 11V, 11B est destiné à amplifier les deux signaux primaires respectifs $R_1$ et $R_2$, $V_1$ et $V_2$, $B_1$ et $B_2$ avec deux gains respectifs afin d'additionner deux signaux amplifiés en un signal résultant RR, RV, RB. Dans le mélangeur 11R, 11V, 11B, deux amplificateurs opérationnels à gain variable $13R_1$ et $13R_2$, $13V_1$ et $13V_2$, $13B_1$ et $13B_2$ reçoivent les signaux $R_1$ et $R_2$, $V_1$ et $V_2$, $B_1$ et $B_2$ à partir des entrées $10R_1$ et $10R_2$, $10V_1$ et $10V_2$, $10B_1$ et $10B_2$ et ont des sorties reliées à des entrées d'un circuit d'addition 14R, 14B, 14V effectuant le mélange proprement dit pour fournir le signal RR, RV, RB à une sortie 15R, 15V, 15B. Chaque signal résultant RR, RV et RB a une amplitude toujours comprise entre deux limites de tension normalisées, savoir 0 volt pour le niveau noir et BL = 0,7 volt pour le niveau blanc, afin d'éviter un écrêtage et une perte de qualité d'image au cours d'un traitement ultérieur du signal résultant.

Selon l'invention, chaque mélangeur 11R, 11V, 11B ne reçoit qu'un signal de commande de gain αa délivré par la sortie 123 du circuit 12, directement vers une entrée de commande de gain $16R_2$, $16V_2$, $16B_2$ de l'amplificateur $13R_2$, $13V_2$, $13B_2$ et, à travers un circuit inverseur analogique 17R, 17V, 17B produisant un signal complémentaire 1 – αa, vers une entrée de commande de gain $16R_1$, $16V_1$, $16B_1$ de l'amplificateur $13R_1$, $13V_1$, $13B_1$. Les trois circuits inverseurs 17R, 17V et 17B peuvent être remplacés par un unique circuit inverseur analogique. Le signal αa est un signal analogique. A l'état "1", correspondant à une amplitude de 1 volt, le signal αa commande la transmission des signaux $R_2$, $V_2$ et $B_2$ vers les sorties 15R, 15V et 15B à travers les amplificateurs $13R_2$, $13V_2$ et $13B_2$ ayant alors un gain égal à l'unité, et le blocage des signaux $R_1$, $V_1$ et $B_1$ dans les amplificateurs $13R_1$, $13V_1$ et $13B_1$ ayant alors un gain égal à zéro ; dans ce cas, on a $RR = R_2$, $RV = V_2$ et $RB = B_2$. Réciproquement, le signal αa à l'état "0" commande la transmission des signaux $R_1$, $V_1$ et $B_1$ vers les sorties 15R, 15V et 15B à travers les amplificateurs $13R_1$, $13V_1$ et $13B_1$ et le blocage des signaux $R_2$, $V_2$ et $B_2$ dans les amplificateurs $13R_2$, $13V_2$ et $13B_2$ ; dans ce cas, on a $RR = R_1$, $RV = V_1$ et $RB = B_1$. A un niveau intermédiaire entre "0" et "1", le signal αa détermine le niveau des seconds signaux $R_2$, $V_2$ et $B_2$ et le signal complémentaire 1 – αa détermine les niveaux des signaux $R_1$, $V_1$ et $B_1$ égaux respectivement aux compléments à 1 volt des niveaux des signaux $R_2$, $V_2$ et $B_2$ ; les signaux résultants sont tels que $RR = (1 - \alpha a)R_1 + \alpha a\ R_2$ avec $0<RR<BL$ volt, $RV = (1 - \alpha a)V_1 + \alpha a\ V_2$ avec $0<RV<BL$ volt, et $RB = (1 - \alpha a)B_1 + \alpha a\ B_2$ avec $0<RB<BL$ volt.

Selon une autre variante, les amplificateurs $13R_1$, $13V_1$, $13B_1$ et $13R_2$, $13V_2$ et $13B_2$ sont remplacés par des multiplieurs analogiques effectuant respectivement les produits des signaux $R_1$, $V_1$ et $B_1$ par le signal 1 – αa et les produits des signaux $R_2$, $V_2$ et $B_2$ par le signal αa.

Ainsi les signaux RR, RV et RB sont représentatifs d'une image composite résultante combinant des première et seconde images $I_1$ et $I_2$ représentées respectivement par les signaux $R_1$, $V_1$, $B_1$ et $R_2$, $V_2$ et $B_2$ avec des atténuations respectives 1 – αa et αa. Cependant, l'amplitude du signal αa dépend des amplitudes des signaux vidéos composites $SC_1$ et $SC_2$ et donc respectivement de celles des signaux $R_1$, $V_1$, $B_1$ et $R_2$, $V_2$ et $B_2$ et est en général différente de 0 ou 1 lorsque l'un des signaux $SC_1$ et $SC_2$, tels que le signal $SC_1$, a une amplitude maximale ou une amplitude minimale, contrairement aux systèmes d'incrustation d'images connus. Comme on le verra dans la suite, le signal αa dépend d'une combinaison linéaire des amplitudes des signaux $SC_1$ et $SC_2$ et, plus précisément dépend tantôt de l'une de ces amplitudes, tantôt de l'autre, afin d'obtenir une surimpression d'une image sur l'autre. Par exemple, la seconde image $I_2$ représente un fantôme ou un voile ou un rideau de pluie à combiner en surimpression sur la première image $I_1$ représentant une scène. Dans ce cas, des zones blanches de la seconde image apparaîssent dans l'image résultante R avec une légère transparence de la première image comme montré schématiquement à la Fig. 2.

Selon une seconde réalisation montrée à la Fig. 1B, un système de surimpression 1b reçoit par trois entrées $10Y_1$, $10DR_1$ et $10DB_1$ trois signaux composants $Y_1$, $DR_1$ et $DB_1$ transmis en parallèle, représentant la première image $I_1$, et par trois entrées $10Y_2$, $10DR_2$ et $10DB_2$ trois signaux composants $Y_2$, $DR_2$ et $DB_2$ transmis en parallèle, représentant la seconde image $I_2$. Les signaux $Y_1$ et $Y_2$ sont des signaux de luminance et les autres signaux composants des signaux de différence de couleurs tels que : $DR_1 = R_1 - Y_1$, $DB_1 = B_1 - Y_1$, $DR_2 = R_2 - Y_2$ et $DB_2 = B_2 - Y_2$. Les signaux de luminance $Y_1$ et $Y_2$ sont appliqués respectivement aux entrées 121 et 122 du circuit de commande de gain 12 pour produire un signal de commande αb par la sortie 123. D'une manière analogue au système 1a, le système d'incrustation 1b comprend trois mélangeurs 11Y, 11DR et 11DB ayant chacun deux amplificateurs à gain variable $13Y_1$ et $13Y_2$, $13DR_1$ et $13DR_2$, $13DB_1$ et $13DB_2$, recevant les signaux composants $Y_1$ et $Y_2$, $DR_1$ et $DR_2$, $DB_1$ et $DB_2$, et un circuit d'addition 14Y, 14DR, 14DB fournissant par une sortie 15Y, 15DR, 15DB un signal résultant respectif $RY = (1 - \alpha b)Y_1 + \alpha b.Y_2$, $RDR = (1 - \alpha b)DR_1 + \alpha b.DR_2$ et $RDB = (1 - \alpha b)DB_1 + \alpha b.DB_2$. Le signal de commande αb est appliqué directement à des entrées de commande de gain $16Y_2$, $16DR_2$ et

$16DB_2$ des amplificateurs $13Y_2$, $13DR_2$ et $13DB_2$, et à travers des circuits inverseurs analogiques 17Y, 17DR et 17DB à des entrées de commande de gain $16Y_1$, $16DR_1$ et $16DB_1$ des amplificateurs $13Y_1$, $13DR_1$ et $13DB_1$.

Selon des troisième et quatrième réalisations montrées aux Figs. 1C et 1D, les images $I_1$ et $I_2$ sont représentées par des signaux vidéos $SI_1$ et $SI_2$ codés selon l'un de standards de télévision en couleurs connus

Selon la troisième réalisation relative à des signaux vidéos codés selon le standard NTSC ou PAL, montrée à la Fig. 1C, un système de surimpression 1c comprend deux filtres passe-bas $F_1$ et $F_2$, à fréquence de coupure de l'ordre de 3 MHz, pour filtrer respectivement les signaux codés $SI_1$ et $SI_2$ en des signaux de luminance $Y_1$ et $Y_2$ appliqués aux entrées 121 et 122 du circuit de commande de gain 12. Le système 1c comprend un unique mélangeur 11 comprenant deux amplificateurs à gain variable $13_1$ et $13_2$ recevant respectivement les signaux vidéos codés $SI_1$ et $SI_2$ via les entrées $10_1$ et $10_2$ des filtres $F_1$ et $F_2$ et un circuit d'addition 14 pour fournir un signal résultant $RI = (1 - \alpha c)SI_1 + \alpha c.SI_2$. Le signal de commande $\alpha c$ est appliqué directement à une entrée de commande de gain $16_2$ de l'amplificateur $13_2$, et à travers un circuit inverseur analogique 17 à une entrée de commande de gain $16_1$ de l'amplificateur $13_1$.

Selon la quatrième réalisation relative à des signaux vidéos $SI_1$ et $SI_2$ codés selon le standard SECAM, montrée à la Fig. 1D, un système de surimpression 1d reçoit les signaux vidéos codés $SI_1$ et $SI_2$ par des entrées $10_1$ et $10_2$ de deux démodulateurs $DM_1$ et $DM_2$. Chaque démodulateur $DM_1$, $DM_2$ restitue par une première sortie un signal de luminance respectif $Y_1$, $Y_2$ appliqué à l'entrée 121, 122 du circuit de commande de gain 12 et à une entrée d'un amplificateur à gain variable $13Y_1$, $13Y_2$ d'un mélangeur 11Y du système 1d. Des secondes sorties des démodulateurs $DM_1$ et $DM_2$ restituent respectivement des signaux de chrominance $CH_1$ et $CH_2$ qui sont appliqués à des entrée d'amplificateurs à gain variable $13CH_1$ et $13CH_2$ d'un autre mélangeur 11CH du système 1d. Dans les mélangeurs 11Y et 11CH, des circuits d'addition 14Y et 14CH fournissent respectivement un signal résultant de luminance $RY = (1 - \alpha d)Y_1 + \alpha d.Y_2$ et un signal résultant de chrominance $RCH = (1 - \alpha d)CH_1 + \alpha d.CH_2$ par des sorties 15Y et 15CH. $\alpha d$ désigne un signal de commande de gain produit par la sortie 123 du circuit 12 et appliqué directement à des entrées de commande de gain $16Y_2$ et $16CH_2$ des amplificateurs $13Y_2$ et $13CH_2$, et à travers des circuits inverseurs analogiques 17Y et 17CH à des entrées de commande de gain $16Y_1$ et $16CH_1$ des amplificateurs $13Y_1$ et $13CH_1$.

Dans toutes les réalisations ci-dessus, les signaux entrants et les signaux résultants ont des amplitudes crête à crête normalisées

On décrit maintenant en détail le circuit de commande de gain 12, en désignant par $S_1$ et $S_2$ des premier et second signaux appliqués aux entrées 121 et 122 et établis à partir de deux signaux d'image entrant ou de deux groupes de signaux d'image entrants. Selon les réalisations ci-dessus, les signaux $S_1$ et $S_2$ correspondent aux signaux $SC_1$ et $SC_2$ issus des signaux composants entrants $R_1$, $V_1$, $B_1$ et $R_2$, $V_2$, $B_2$ (Fig. 1A), ou aux signaux de luminance entrants $Y_1$ et $Y_2$ (Fig. 1B), ou aux signaux $Y_1$ et $Y_2$ issus des signaux vidéo codais entrants, $SI_1$ et $SI_2$ (Fig. 1C ou 1D). Dans la suite, $\alpha$ désigne le signal de commande de gain $\alpha a$, $\alpha b$, $\alpha c$ ou $\alpha d$.

En référence à la Fig. 3, le circuit de commande de gain 12 comprend dans une première voie recevant le premier signal $S_1$, un circuit d'alignement au niveau noir (clamp) 2 et un circuit d'adaptation d'impédance, de décalage du niveau noir et d'amplification 3, et dans une seconde voie recevant le second signal $S_2$, un circuit d'alignement au niveau noir (clamp) 4, un circuit d'adaptation d'impédance 5, un atténuateur 6 et un circuit de décalage de niveau noir et d'amplification 7. Le circuit 12 comprend également un circuit de comparaison 8 délivrant le plus grand des deux signaux fournis par les circuits 3 et 8 et un étage de sortie 9. Les circuits 2, 3, 8 et 9 sont montrés en detail à la Fig. 4A et les circuits 4, 5, 6 et 7 sont montrés en détail à la Fig. 4B.

Comme montré aux Figs. 4A et 4B, les circuits d'alignement au niveau noir 2 et 4 sont identiques. Chaque circuit 2, 4 comportent d'une manière connue, un circuit d'adaptation à un câble transmettant le signal respectif $S_1$, $S_2$ via les entrées 121 et 122, et un circuit d'alignement proprement dit à deux transistors recevant des impulsions d'alignement au niveau noir (clamp) via une entrée CLP. Le circuit d'adaptation est composé d'une résistance 20, 40 ayant une valeur ohmique égale à l'impédance caractéristique du câble, typiquement de 75 ohms, et d'un condensateur de couplage 21, 41. Le circuit à transistors comprend un transistor bipolaire PNP 22, 42 et un transistor à effet de champ 23, 43 ayant un émetteur et une source reliés à une borne de référence à la terre. Dans les Figs. 4A et 4B sont indiquées par + V et – V deux tensions de polarisation opposées, typiquement égales à + 12 volts et – 12 volts. Ainsi, la base du transistor 22, 42 et la grille du transistor 23, 43 sont polarisées à – V à travers des résistances convenables.

La base du transistor 22, 42 est reliée à la borne CLP à travers une résistance 24, 44. Le collecteur du transistor 22, 42 est reliée à la grille du transistor 23, 43. Le drain du transistor 23, 43 est relié à une armature du condensateur 21, 41 et à une borne d'entrée 30, 50 du circuit 3, 5 recevant le signal $S_1$, $S_2$ avec une amplitude alignée sur le niveau noir égal à 0 volt.

Le circuit 3 montré à la Fig. 4A comprend un circuit d'adaptation d'impédance et d'amplification comprenant deux transistors à effet de champ 31 et 32 et un amplificateur opérationnel 33 à gain négatif $G_1 = -1,4$ volt, ainsi qu'un circuit de décalage du niveau noir à $V_1 = 0,5$ volt. Les deux transistors 31 et 32 ont des drains et des sources polarisés à + V et – V. Le transistor 31 a une grille reliée à la borne d'entrée 30 et une source reliée à une entrée inverse ( – ) de l'amplificateur 33 à travers une résistance 34. L'autre transistor 32 a une grille reliée à un pont résistif 35 à résistance centrale réglable 350 ayant des bornes portées à – V et – V, ainsi qu'à une armature d'un condensateur de dérivation 351. Le pont résistif 35 permet d'ajuster le décalage du niveau noir dans le signal aligné $S_1$ à $V_1 = + 0,5$ volt. La source du transistor 32 est reliée à une entrée directe ( + ) de l'amplificateur 33 à travers une résistance 36. L'entrée directe ( + ) est reliée à la terre à travers une résistance 37, tandis que l'entrée inverse ( – ) est reliée à une sortie 38 de l'amplificateur 33 à travers une résistance de contre-réaction réglable 39. Ainsi les éléments 33, 34, 36, 37 et 39 constituent un soustracteur-amplificateur pour soustraire la tension de décalage $V_1 = 0,5$ volt au signal $S_1$ amplifié avec un gain $G_1 = -1,4$ volt en un signal $S'_1 = V_1 + G_1S_1$ fourni par la sortie 38.

Dans la seconde voie du circuit de commande de gain 12 montrée à la Fig. 4B, la fonction d'adaptation d'impédance et les fonctions de décalage de niveau noir et d'amplification sont séparées par l'atténuateur 6.

La fonction d'adaptation d'impédance conférant une impédance d'entrée élevée et une impédance de sortie très faible est réalisée par le circuit 5. Comme dans le circuit 3, deux transistors à effet de champ 51 et 52 et un amplificateur opérationnel 53 sont prévus dans le circuit 5. La borne d'entrée 50 est reliée à la grille du transistor 51. Les sources des transistors 51 et 52 sont respectivement reliées à des bornes directe ( + ) et inverse ( – ) de l'amplificateur 53 ayant une sortie 58 reliée à la grille du transistor 52. Le gain conféré par l'amplificateur 53 est ainsi égal à l'unité.

L'atténuateur 6 a une structure fondée sur le principe de fonctionnement d'un commutateur-mélangeur analogique à vitesse de commutation variable divulgué dans la demande de brevet français FR-A-2 484 109 déposée le 4 juin 1980. Ainsi, l'atténuateur 6 comprend deux résistances variables formées par des résistances drain-source de deux transistors à effet de champ 60 et 61, fonctionnant en régime non saturé, et un amplificateur différentiel ayant deux transistors bipolaires NPN 62 et 63, fonctionnant en mode non équilibré et en sortie dissymétrique. Des premières électrodes ; drains ou sources, des transistors 60 et 61 sont respectivement reliés à la sortie 58 du circuit d'adaptation 5 et à la terre. Des secondes électrodes, sources ou drains, des transistors 60 et 61 sont reliés à une borne de sortie 64 de l'atténuateur 6. Les grilles des transistors 60 et 61 reçoivent des signaux opposés fournis par des collecteurs des transistors bipolaires 62 et 63 ce qui est assuré par fonctionnement en sortie dissymétrique de l'amplificateur différentiel. Le mode non équilibré de l'amplificateur différentiel est assuré par l'application d'un signal de commande C à la base du transistor 63 à travers un circuit d'adaptation de câble à résistance série et condensateur de dérivation 65 et un amplificateur suiveur 66, et par l'application du potentiel référé à la terre à la base de l'autre transistor bipolaire 62 à travers une résistance 67. Un réglage du commutateur-mélangeur est prévu au moyen d'une résistance variable 68 interconnectée entre la borne de polarisation à – V et une borne commune à deux résistances reliées aux émetteurs des transistors 62 et 63, et au moyen d'une autre résistance variable 69 interconnectée entre la borne de polarisation à – V et la base du transistor 62.

Le signal C appliqué à l'entrée du circuit 65 formant une entrée de commande de l'atténuateur 6 est un signal à amplitude variable destiné à commander le dosage de la surimpression de la seconde image $I_2$ représentée par les signaux $R_2$, $V_2$, $B_2$ (Fig. 1A) ou $Y_2$, $DR_2$, $DB_2$ (Fig. 1B), ou par le signal $SI_2$ (Fig. 1C ou 1D) dans la première image $I_1$ représentée par les signaux $R_1$, $V_1$, $B_1$ (Fig. 1A) ou $Y_1$, $DR_1$, $DB_1$ (Fig. 1B), ou par le signal $SI_1$ (Fig. 1C ou 1D). Puisque le drain, ou la source, du transistor 61 est à la terre, la variation du signal C permet d'atténuer directement le signal $S_2$ sortant du circuit 4 avec un facteur d'atténuation variable A inférieur à une constante prédéterminée inférieure ou égale à l'unité et choisie au moyen des résistances variables 68 et 69. Lorsque le signal C est au niveau bas "0", le signal $AS_2$ à la borne de sortie 64 est nul ce qui supprime la seconde image $I_2$ dans d'image résultante R du système de surimpression 1a, 1b, 1c ou 1d.

Dans le circuit de décalage de niveau noir et d'amplification 7 montré à la Fig. 4B, le signal atténué $AS_2$ fourni par la sortie 64 de l'atténuateur 6 est appliqué à une entrée directe ( + ) d'un amplificateur opérationnel 73 fonctionnant en soustracteur. L'amplificateur 73 et un pont résistif 76 à résistance variable 760 polarisée entre + V et 0 volt jouent des rôles analogues à l'amplificateur 33 et au pont résistif 35 dans la première voie (Fig. 4A). Ainsi une borne inverse ( – ) de l'amplificateur 73 est reliée à une borne intermédiaire de sortie du pont résistif 76, à la terre à travers une résistance 77, et à une sortie 78 de l'amplificateur 73 à travers une résistance de contre-réaction réglable 79 en parallèle avec un condensateur 75. Cependant, la résistance 760 est réglée pour conférer un décalage du niveau noir négatif $V_2 = -0,2$ volt et la résistance 79 est réglée pour conférer un gain positif $G_2 = 3$ afin que le signal $S'_2$ à la sortie 78 soit tel que :

$$S'_2 = V_2 + G_2 (AS_2)$$

En se référant à nouveau à la Fig. 4A, le circuit de comparaison 8 comprend deux diodes 81 et 82 ainsi qu'un transistor bipolaire PNP 83 monté en collecteur commun. Les diodes 81 et 82 ont des anodes reliées aux sorties 38 et 78 des circuits 3 et 7 et des cathodes reliées à la base du transistor 83. Chaque diode 81, 82 peut être remplacée par tout autre élément unidirectionnel, tel qu'un transistor NPN ayant des base et collecteur reliées à la borne 38, 78 et un émetteur relié à la base du transistor 83. Les diodes permettent de sélectionner le signal ayant la plus grande amplitude parmi les deux signaux $S'_1$ et $S'_2$. Le transistor 83 compense le décalage continu dû aux diodes. Un signal analogique S sortant du circuit 8 par le collecteur du transistor 83 est appliqué à une entrée 90 de l'étage de sortie 9. Dans l'étage 9, le signal S est écrêté entre 0 et 1 volt pour fournir le signal $\alpha$ par une sortie du circuit 9 constituant la sortie 123 du circuit de commande de gain 12.

A titre d'exemple, la Fig. 5 montre un signal a obtenu à partir d'un signal en dents de scie $S_1$ compris entre 0 et 0,7 volt et d'un signal $S_2$ au niveau noir de 0 volt, et la Fig.6 montre un signal $\alpha$ obtenu à partir de deux signaux en dents de scie $S_1$ et $S_2$ compris entre 0 et 0,7 volt. Pour ces deux exemples, il est supposé que le facteur d'atténuation A est égal à l'unité.

Comme montré particulièrement à la Fig. 6, lorsque $S'_2 > S'_1$, l'amplitude du signal de commande $\alpha$ est comprise entre 1 volt et une amplitude, indiquée en un point M, telle que

$$S'_2 = S'_1$$

soit

$$V_1 + G_1S_1 = V_2 + G_2AS_2$$

Dans ce cas, l'effet de surimpression, c'est-à-dire du mélange des images $I_1$ et $I_2$, dépend du signal $S_2$ puisque $\alpha = V + G_2AS_2$. Plus le niveau du signal $S_2$ diminue, plus la première image $I_1$ correspondant au signal $S_1$ est prépondérante dans l'image résultante R. Cependant, $\alpha$ ne dépend pas uniquement de l'amplitude du signal $S_2$, mais également des paramètres $V_2$ et $G_2$, et notamment du facteur d'atténuation A qui permet de doser l'influence du signal $S_2$ dans l'image résultante, quelle que soit l'amplitude du signal $S_1$. Réciproquement, il en est de même par rapport au signal $S_1$, lorsque $S'_2 < S'_1$ et $\alpha = V_1 + G_1S_1$. Cependant, dans ce dernier cas, le signal de dosage de surimpression C n'intervient pas dans le mélange des images tant que $S'_2$ est inférieur à $S'_1$, puisque l'image à superposer, représentée par le signal $S_2$ est sombre, voire noire.

Dans tous les cas montrés à la Fig. 6, au moins une légère transparence de la seconde image $I_2$ fait apparaître la première image $I_1$ dans l'image résultante R.

## Revendications

1. Système de surimpression d'images (1) comprenant des moyens de mélange (11) recevant deux signaux d'image ($I_1$, $I_2$) ayant des amplitudes crête-à-crête comprises dans un intervalle de tension prédéterminé (0, BL) et un unique signal de commande de gain ($\alpha$), lesdits moyens de mélange incluant

un premier moyen d'amplification à gain variable ($13_1$) recevant l'un ($I_1$) des signaux d'image et ayant une entrée de commande de gain recevant directement le signal de commande de gain,

un second moyen d'amplification à gain variable ($13_2$) recevant l'autre signal d'image ($I_2$) et ayant une entrée de commande de gain recevant le signal de commande de gain à travers des moyens d'inversion analogique (17), et

des moyens d'addition (14) pour mélanger les signaux sortant des moyens d'amplification en un signal résultant (R),

le système étant caractérisé en ce qu'il comprend des moyens (12) pour établir un unique signal de commande de gain ($\alpha$) à partir d'une combinaison linéaire de deux signaux ($S_1$, $S_2$) issus respectivement des deux signaux d'image ($I_1$, $I_2$) afin que l'amplitude crête-à-crête du signal réqultant (R) soit constamment comprise dans ledit intervalle de tension (0, BL).

2. Système conforme à la revendication 1, caractérisé en ce que les moyens pour établir un signal de commande (12) comprennent deux moyens (3, 7) pour décaler les amplitudes desdits deux signaux issus ($S_1$, $S_2$), puis amplifier lesdits deux signaux issus décalés pour fournir deux signaux intermédiaires ($S_{1'}$, $S_{2'}$), des moyens (8) pour sélectionner le signal intermédiaire (S) ayant la plus grande amplitude et des moyens (9) pour écrêter le signal intermédiaire sélectionné ayant la plus grande amplitude et fournir ainsi le signal de commande ($\alpha$).

3. Système conforme à la revendication 2, caractérisé en ce que chacun des moyens pour décaler puis amplifier (3, 7) comprend un amplificateur opérationnel (33, 73) fonctionnant en soustracteur, ayant une entrée (34, 64) recevant ledit signal issu respectif ($S_1$, $S_2$) et une autre entrée (36, 760) recevant une tension de décalage réglable ($V_1$, $V_2$).

4. Système conforme à la revendication 2 ou 3, caractérisé en ce que l'un des moyens pour décaler puis amplifier (3) décale et amplifie ledit signal issu respectif ($S_1$) avec une tension de décalage réglable positive ($V_1$) et un gain réglable négatif ($G_1$), et l'autre des moyens pour décaler puis amplifier (7) décale et amplifie ledit signal issu respectif ($S_2$) avec une ten-

sion de décalage réglable négative ($V_2$) et un gain réglable positif ($G_2$).

5. Système conforme à l'une quelconque des revendications 2 à 4, caractérisé en ce que les moyens pour sélectionner (8) comprennent un transistor (83) ayant une base reliée à des sorties (38, 78) des moyens pour décaler puis amplifier (3, 7) à travers deux éléments unidirectionnels, tels que diodes (81, 82).

6. Système conforme à l'une quelconque des revendications 2 à 5, caractérisé en ce que les aryens pour établir (12) comprennent des moyens (6) pour atténuer l'un desdits signaux issus ($S_2$) par un facteur d'atténuation (A) en un signal atténuai ($AS_2$) appliqué aux moyens respectifs pour décaler puis amplifier (7).

7. Système conforme à la revendication 6, caractérisé en ce que les moyens pour atténuer (6) comprennent une entrée de commande (C) pour modifier le facteur d'atténuation (A).

8. Système conforme à la revendication 6 ou 7, caractérisé en ce que les moyens pour atténuer (6) comprennent deux transistors à effet de champ (60, 61) et un amplificateur différentiel (62, 63) fonctionnant en mode non équilibré et en sortie dissymétrique, les transistors (60, 61) ayant respectivement des premières électrodes ou correspondant à des drains ou des sources, l'une recevant ledit signal issu ($S_2$) et l'autre étant reliée à la terre, des secondes électrodes correspondant à des sources (64) ou des drains, reliées entre elles pour fournir le signal atténué ($AS_2$), et des grilles reliées à des sorties de l'amplificateur différentiel (62, 63), ledit amplificateur différentiel ayant une entrée (65, 66) recevant un signal de commande d'atténuation (C) pour doser la surimpression.

9. Système conforme à l'une quelconque des revendications 1 à 8, caractérisé en ce que les moyens pour établir (12) comprennent en entrée ($10_1$, $10_2$) deux moyens d'alignement à 0 volt et d'adaptation d'impédance (2, 3 ; 4, 5) recevant respectivement lesdits signaux issus ($S_1$, $S_2$).

10. Système conforme à l'une quelconque des revendications 1 à 9, caractérisé en ce que les moyens d'amplification à gain variable ($13_1$, $13_2$) sont remplacés par des moyens de multiplication analogiques.

11. Système (1a) conforme à l'une quelconque des revendications 1 à 10, dans lequel lesdits deux signaux d'image ($I_1$ ; $I_2$) sont chacun sous la forme d'un ensemble de trois signaux primaires de couleur ($R_1$, $V_1$, $B_1$ ; $R_2$, $V_2$, $B_2$) transmis en parallèle, caractérisé en ce qu'il comprend deux matrices vidéos ($M_1$ ; $M_2$) pour combiner respectivement les deux ensembles de trois signaux primaires en ledits signaux issus ($S_1 = SC_1$ ; $S_2 = SC_2$) et en ce que les moyens de mélange comprennent trois mélangeurs (11R ; 11V ; 11B) incluant chacun des premier et second amplificateurs à gain variable ($13R_1$, $13R_2$ ; $13V_1$, $13V_2$ ; $13B_1$, $13B_2$) ayant chacun une entrée de commande de gain et recevant deux signaux primaires d'une même couleur respective, et un circuit d'addition (14R ; 14V ; 14B) mélangeant les signaux sortant des premier et second amplificateurs, ledit signal de commande de gain ($\alpha a$) étant appliqué à travers les moyens d'inversion analogiques (17R, 17V, 17B) et directement aux entrées de commande de gain des premiers et seconds amplificateurs, respectivement.

12. Système (1b) conforme à l'une quelconque des revendications 1 à 10, dans lequel lesdits deux signaux d'image ($I_1$, $I_2$) sont chacun sous la forme d'un signal de luminance ($Y_1$, $Y_2$), d'un premier signal de différence de couleurs ($DR_1$, $DR_2$) et d'un second signal de différence de couleurs ($DB_1$, $DB_2$) transmis en parallèle, caractérisé en ce que lesdits signaux de luminance ($Y_1$, $Y_2$) sont lesdits signaux issus ($S_1$, $S_2$) et en ce que les moyens de mélange comprennent trois mélangeurs (11Y ; 11DR ; 11DB) incluant des premiers amplificateurs à gain variable ($13Y_1$, $13DR_1$, $13DB_1$) recevant respectivement le signal de luminance et les premier et second signaux de différence de couleurs correspondant à l'un des signaux d'image ($I_1$), des seconds amplificateurs à gain variable ($13Y_2$, $13DR_2$, $13DB_2$) recevant respectivement le signal de luminance et les premier et second signaux de différence de couleurs correspondant à l'autre signal d'image ($I_2$) et des circuits d'addition (14Y, 14DR, 14DB) pour mélanger respectivement les signaux de luminance amplifiés et les premiers et seconds signaux de différence de couleurs amplifiés, ledit signal de commande de gain ($\alpha b$) étant appliqué à travers les moyens d'inversion analogiques (17Y, 17DR, 17DB) et directement à des entrées de commande de gain des premiers et seconds amplificateurs, respectivement.

13. Système (1c) conforme à l'une quelconque des revendications 1 à 10, dans lequel lesdits deux signaux d'image ($I_1$, $I_2$) sont deux signaux vidéos ($SI_1$, $SI_2$) codés selon le standard NTSC ou PAL, caractérisé en ce qu'il comprend deux filtres passe-bas ($F_1$, $F_2$) pour filtrer les signaux vidéos codés ($SI_1$, $SI_2$) en deux signaux de luminance formant lesdits signaux issus ($S_1 = Y_1$, $S_2 = Y_2$) et en ce que les moyens de mélange comprennent deux amplificateurs à gain variable ($13_1$, $13_2$) recevant respectivement les signaux vidéos codés et un circuit d'addition (14) mélangeant des signaux sortant des amplificateurs, ledit signal de commande ($\alpha c$) étant applique à travers un inverseur analogique (17) et directement à des entrées de commande de gain des deux amplificateurs, respectivement.

14. Système (1d) conforme à l'une quelconque des revendications 1 à 10, dans lequel lesdits deux signaux d'image ($I_1$, $I_2$) sont deux signaux vidéos ($SI_1$, $SI_2$) codés selon le standard SECAM, caractérisé en ce qu'il comprend deux démodulateurs ($DM_1$, $DM_2$) pour démoduler les deux signaux vidéos codés ($SI_1$,

$SI_2$) en deux signaux de luminance formant lesdits signaux issus ($S_1 = Y_1$, $S_2 = Y_2$) et en deux signaux de chrominance ($CH_1$, $CH_2$), et en ce que les moyens de mélange comprennent deux mélangeurs (11Y ; 11CH) incluant chacun des premier et second amplificateurs à gain variable ($13Y_1$, $13Y_2$ ; $13CH_1$, $13CH_2$) recevant respectivement les signaux de luminance ou les signaux de chrominance et un circuit d'addition (14Y, 14CH) mélangeant des signaux sortant des premier et second amplificateurs, ledit signal de commande de gain ($\alpha$d) étant appliqué à travers les moyens d'inversion analogiques (17Y, 17CH) et directement à des entrées de commande de gain des premiers et seconds amplificateurs, respectivement.

**Ansprüche**

1. System zur Überlagerung von Bildern (1), umfassend Mischmittel (11), die zwei Bildsignale ($I_1$, $I_2$), die in einem vorbestimmten Spannungsintervall (0, BL) enthaltene Spitze-Spitze-Amplituden aufweisen, und ein einziges Verstärkungssteuersignal ($\alpha$) aufnehmen, wobei die Mischmittel einschließen

- ein erstes Verstärkungsmittel mit veränderlicher Verstärkung ($13_1$), das das eine ($I_1$) der Bildsignale aufnimmt und einen Verstärkungssteuereingang aufweist, der das Verstärkungssteuersignal direkt aufnimmt,
- ein zweites Verstärkungsmittel mit veränderlicher Verstärkung ($13_2$), das das andere Bildsignal ($I_2$) aufnimmt und einen Verstärkungssteuereingang aufweist, der das Verstärkungssteuersignal durch Mittel zur analogen Umkehrung (17) aufnimmt, und
- Addiermittel (14), um die aus den Verstärkungsmitteln austretenden Signale zu einem resultierenden Signal (R) zu mischen,

wobei das System dadurch **gekennzeichnet** ist, daß es Mittel (12) zur Bildung eines einzigen Verstärkungssteuersignals ($\alpha$) aus einer linearen Kombination von zwei Signalen ($S_1$, $S_2$) umfaßt, die bezüglich der beiden Bildsignale ($I_1$, $I_2$) ausgegeben worden sind, damit die Spitze-Spitze-Amplitude des resultierenden Signals (R) stets in dem Spannungsintervall (0, BL) enthalten ist.

2. System nach Anspruch 1, dadurch **gekennzeichnet**, daß die Mittel zur Bildung eines Steuersignals (12) zwei Mittel (3, 7) zum Verschieben der Amplituden der ausgegebenen Signale ($S_1$, $S_2$), dann Verstärken der beiden verschobenen ausgegebenen Signale zum Liefern von zwei Zwischensignalen ($S_{1'}$, $S_{2'}$), Mittel (8) zum Auswählen des die größere Amplitude aufweisenden Zwischensignals (S) und Mittel (9) zur Spitzenbegrenzung des die größere Amplitude aufweisenden, ausgewählten Zwischensignals und somit zum Liefern des Steuersignals ($\alpha$) umfassen.

3. System nach Anspruch 2, dadurch **gekennzeichnet**, daß jedes der Mittel zum Verschieben, dann Verstärken (3, 7) einen Operationsverstärker (33, 73) umfaßt, der als Subtrahierglied arbeitet, der einen das entsprechende ausgegebene Signal ($S_1$, $S_2$) aufnehmenden Eingang (34, 64) und einen anderen Eingang (36, 760) aufweist, der eine Spannung mit einstellbarer Verschiebung ($V_1$, $V_2$) aufnimmt.

4. System nach Anspruch 2 oder 3, dadurch **gekennzeichnet**, daß das eine der Mittel zum Verschieben, dann Verstärken (3) das entsprechende ausgegebene Signal ($S_1$) mit einer Spannung mit einstellbarer positiver Verschiebung ($V_1$) und einer einstellbaren negativen Verstärkung ($G_1$) verschiebt und verstärkt und das andere der Mittel zum Verschieben, dann Verstärken (7) das entsprechende ausgegebene Signal ($S_2$) mit einer Spannung mit einstellbarer negativer Verschiebung ($V_2$) und einer einstellbaren positiven Verstärkung ($G_2$) verschiebt und verstärkt.

5. System nach einem beliebigen der Ansprüche 2 bis 4, dadurch **gekennzeichnet**, daß die Mittel zum Auswählen (8) einen Transistor (83) umfassen, der eine Basis aufweist, die mit Ausgängen (38, 78) der Mittel zum Verschieben, dann Verstärken (3, 7) durch zwei einseitig gerichtete Elemente wie Dioden (81, 82) verbunden ist.

6. System nach einem beliebigen der Ansprüche 2 bis 5, dadurch **gekennzeichnet**, daß die Mittel zum Bilden (12) Mittel (6) umfassen, um das eine der ausgegebenen Signale ($S_2$) um einen Abschwächungsfaktor (A) zu einem abgeschwächten Signal ($AS_2$) abzuschwächen, das an die entsprechenden Mittel zum Verschieben, dann Verstärken (7) angelegt wird.

7. System nach Anspruch 6, dadurch **gekennzeichnet**, daß die Mittel zum Abschwächen (6) einen Steuereingang (C) zum Ändern des Abschwächungsfaktors (A) umfassen.

8. System nach Anspruch 6 oder 7, dadurch **gekennzeichnet**, daß die Mittel zum Abschwächen (6) zwei Feldeffekttransisitoren (60, 61) und einen Differentialverstärker (62, 63), der im Nicht-Gleichgewichtsmodus und mit asymmetrischem Ausgang arbeitet, wobei die Transistoren (60, 61) jeweils Drain-Zonen oder Source-Zonen entsprechende erste Elektroden, von denen eine das augegebene Signal ($S_2$) aufnimmt und die andere mit Erde verbunden ist, jeweils Source-Zonen (64) oder Drain-Zonen entsprechende zweite Elektroden, die miteinander verbunden sind, um das abgeschwächte Signal ($AS_2$) zu bilden, und Gitter aufweisen, die mit Ausgängen des Differentialverstärkers (62, 63) verbunden sind, wobei der Differentialverstärker einen ein Steuerabschwächungssignal (C) aufnehmenden Eingang (65, 66) zur Bemessung der Überlagerung aufweist.

9. System nache inem beliebigen der Ansprüche 1 bis 8, dadurch **gekennzeichnet**, daß die Mittel zum Bilden (12) im Eingang ($10_1$, $10_2$) zwei Mittel zum Abstimmen auf 0 Volt und zur Impedanzanpassung (2, 3 ; 4, 5) umfassen, die jeweils die ausgegebenen

Signale ($S_1$, $S_2$) aufnehmen.

10. System nach einem beliebigen der Ansprüche 1 bis 9, dadurch **gekennzeichnet**, daß die Mittel zur Verstärkung mit veränderlicher Verstärkung ($13_1$, $13_2$) durch analoge Multipliziermittel ersetzt sind.

11. System (1a) nach einem beliebigen der Ansprüche 1 bis 10, in dem die beiden Bildsignale ($I_1$; $I_2$) jeweils in der Form eines Satzes von drei Farbwertsignalen ($R_1$, $V_1$, $B_1$ ; $R_2$, $V_2$, $B_2$) sind, die parallel übertragen werden, dadurch **gekennzeichnet**, daß es zwei Videomatritzen ($M_1$ ; $M_2$) umfaßt, um jeweils die beiden Sätze von drei Primärsignalen zu den ausgegebenen Signalen ($S_1 = SC_1$ ; $S_2 = SC_2$) zu kombinieren und daß die Mischmittel (3) Mischer (11R ; 11V ; 11B) umfassen, die jeweils erste und zweite Verstärker mit veränderlicher Verstärkung ($13R_1$, $13R_2$ ; $13V_1$, $13V_2$ ; $13B_1$, $13B_2$), die jeweils einen Verstärkungssteuereingang aufweisen und zwei Primärsignale einer gleichen entsprechenden Farbe aufnehmen, und einen Addierkreis (14R ; 14V ; 14B) einschließen, der die aus den ersten und zweiten Verstärkern austretenden Signale mischt, wobei das Verstärkungssteuersignal ($\alpha$a) durch die analogen Umkehrmittel (17R, 17V, 17B) und direkt an die Verstärkungssteuereingänge der ersten und zweiten Verstärker jeweils angelegt wird.

12. System (1b) nach einem beliebigen der Ansprüche 1 bis 10, in dem die beiden Bildsignale ($I_1$, $I_2$) jeweils in der Form eines Luminanzsignals ($Y_1$, $Y_2$) eines ersten Farbdifferenzsignals ($DR_1$, $DR_2$) und eines zweiten Farbdifferenzsignals ($DB_1$, $DB_2$) sind, die parallel übertragen werden, dadurch **gekennzeichnet**, daß die Luminanzsignale ($Y_1$, $Y_2$) die ausgegebenen Signale ($S_1$, $S_2$) sind und daß die Mischmittel (3) Mischer (11Y ; 11DR ; 11DD) umfassen, einschließend erste Verstärker mit veränderlicher Verstärkung ($13Y_1$, $13DR_1$, $13DB_1$), die jeweils das Luminanzsignal und die ersten und zweiten Farbdifferenzsignale entsprechend dem einen der Bildsignale ($I_1$) aufnehmen, zweite Verstärker mit veränderlicher Verstärkung ($13Y_2$, $13DR_2$, $13DB_2$), die jeweils das Luminanzsignal und die ersten und zweiten Farbdifferenzsignale entsprechend dem anderen Bildsignal ($I_2$) aufnehmen, und Addierkreise (14Y, 14DR, 14DB), um jeweils die verstärkten Luminanzsignale und die verstärkten ersten und zweiten Farbdifferenzsignale zu mischen, wobei das Verstärkungssteuersignal ($\alpha$b) durch die analogen Umkehrmittel (17Y, 17DR, 17DB) und direkt an Steuerverstärkungseingänge der ersten und zweiten Verstärker jeweils angelegt wird.

13. System (1c) nach einem beliebigen der Ansprüche 1 bis 10, in dem die beiden Bildsignale ($I_1$, $I_2$) zwei jeweils nach dem NTSC- oder PAL-Standard codierte Videosignale ($SI_1$, $SI_2$) sind, dadurch **gekennzeichnet**, daß es zwei Tiefpaßfilter ($F_1$, $F_2$) zum Filtern der codierten Videosignale ($SI_1$, $SI_2$) zu zwei die ausgegebenen Signale ($S_1 = Y_1$, $S_2 = Y_2$) bildenden Luminanzsignalen umfaßt, und daß die Mischmittel (2) Verstärker mit veränderlicher Verstärkung ($13_1$, $13_2$), die jeweils die codierten Videosignale aufnehmen, und einen Addierkreis (14) umfassen, der aus den Verstärkern austretende Signale mischt, wobei das Steuersignal ($\alpha$c) durch ein analoges Umkehrglied (17) und direkt an Verstärkungssteuereingänge von zwei Verstärkern jeweils angelegt wird.

14. System (1d) nach einem beliebigen der Ansprüche 1 bis 10, in dem die beiden Bildsignale ($I_1$, $I_2$) zwei nach dem SECAM-Standard codierte Videosignale ($SI_1$, $SI_2$) sind, dadurch **gekennzeichnet**, daß es zwei Demodulatoren ($DM_1$, $DM_2$) umfaßt, um die beiden codierten Videosignale ($SI_1$, $SI_2$) zu zwei die ausgegebenen Signale ($S_1 = Y_1$, $S_2 = Y_2$) bildenden Luminanzsignalen und zu zwei Chrominanzsignalen ($CH_1$, $CH_2$) zu demodulieren, und daß die Mischmittel zwei Mischer (11Y ; 11CH) umfassen, die jeweils erste und zweite Verstärker mit veränderlicher Verstärkung ($13Y_1$, $13Y_2$ ; $13CH_1$, $13CH_2$), die jeweils die Luminanzsignale oder die Chrominanzsignale aufnehmen, und einen Addierkreis (14Y, 14CH) einschließen, der die aus den ersten und zweiten Verstärkern austretenden Signale mischt, wobei das Verstärkungssteuersignal ($\alpha$d) durch die analogen Umkehrmittel (17Y, 17CH) und direkt an Verstärkungssteuereingänge der ersten und zweiten Verstärker jeweils angelegt wird.

## Claims

1. Picture superimposing system (1) comprising mixing means (11) receiving two picture signals ($I_1$, $I_2$) having peak-to-peak amplitudes lying within a predetermined voltage range (0, BL) and a single gain control signal ($\alpha$), said mixing means including

a first variable gain amplifying means ($13_1$) receiving one ($I_1$) of the picture signals and having a gain control input directly receiving the gain control signal,

a second variable gain amplifying means ($13_2$) receiving the other picture signal ($I_2$) and having a gain control input receiving the gain control signal through analog inverting means (17), and

adding means (14) for mixing the signals outgoing from the amplifying means into a resulting signal (R),

the system being characterized in that it comprises means (12) for deriving a single gain control signal ($\alpha$) from a linear combination of two signals ($S_1$, $S_2$) respectively derived from the two picture signals ($I_1$, $I_2$) whereby the peak-to-peak amplitude of the resulting signal (R) lies constantly within said voltage range (0, BL).

2. System according to claim 1, characterized in that the control signal deriving means (12) comprise two means (3, 7) for offsetting the amplitudes of said two derived signals ($S_1$, $S_2$), then amplifying said two offset derived signals to provide two intermediate signals ($S'_1$, $S'_2$), means (8) for selecting the intermediate signal (S) having higher amplitude, and means (9) for chopping the selected intermediate signal having higher amplitude thereby providing the control signal ($\alpha$).

3. System according to claim 2, characterized in that each of the offsetting-then-amplifying means (3, 7) comprises an operational amplifier (33, 73) operating as a subtractor, having an input (34, 64) receiving said respective derived signal ($S_1$, $S_2$) and another input (36, 760) receiving an adjustable offsetting voltage ($V_1$, $V_2$).

4. System according to claim 2 or 3, characterized in that one of the offsetting-then-amplifying means (3) offsets and amplifies said respective derived signal ($S_1$) with a positive adjustable offset voltage ($V_1$) and a negative adjustable gain ($G_1$), and the other offsetting-then-amplifying means (7) offsets and amplifies said respective derived signal ($S_2$) with a negative adjustable offset voltage ($V_2$) and a positive adjustable gain ($G_2$).

5. System according to any one of claims 2 to 4, characterized in that the selecting means (8) comprise a transistor (83) having a base connected to outputs (38, 78) of the offsetting-then-amplifying means (3, 7) via two unidirectional components, such as diodes (81, 82).

6. System according to any one of claims 2 to 5, characterized in that the deriving means (12) comprise means (6) for attenuating one of said derived signal ($S_2$) by an attenuation factor (A) into an attenuated signal ($AS_2$) applied to the respective offsetting-then-amplifying means (7).

7. System according to claim 6, characterized in that the attenuating means (6) comprise a control input (C) to adjust the attenuation factor (A).

8. System according to claim 6 or 7, characterized in that the attenuating means (6) comprise two field-effect transistors (60, 61) and a differential amplifier (62, 63) operating in a unbalanced mode and with dissymetrical output, the transistors (60, 61) respectively having first electrodes corresponding to drains or sources, the one receiving said derived signal ($S_2$) and the other one being connected to ground, second electrodes corresponding to sources (61) or drains connected together to supply the attenuated signal ($AS_2$), and gates connected to outputs of the differential amplifier (62, 63), said differential amplifier having an input (65, 66) receiving an attenuation control signal (C) to adjust the superimposure.

9. System according to any one of claims 1 to 8, characterized in that the deriving means (12) comprise on the input ($10_1$, $10_2$) two 0-volt clamping and impedance matching means (2, 3 ; 4, 5) respectively receiving said derived signals ($S_1$, $S_2$).

10. System according to any one of claims 1 to 9, characterized in that the variable gain amplifying means ($13_1$, $13_2$) are replaced by analog multiplication means.

11. System (1a) according to any one of claims 1 to 10, wherein said two picture signals ($I_1$ ; $I_2$) are each in the form of an assembly of three primary colour signals ($R_1$, $V_1$, $B_1$ ; $R_2$, $V_2$, $B_2$) transmitted in parallel, characterized in that it comprises two video matrices ($M_1$ ; $M_2$) to respectively combine the two assemblies of three primary signals into said drived signals ($S_1 = SC_1$ ; $S_2 = SC_2$) and in that the mixing means comprise three mixers (11R ; 11V ; 11B) each including first and variable gain amplifiers ($13R_1$, $13R_2$ ; $13V_1$, $13V_2$ ; $13B_1$, $13B_2$) having each a gain control input and receiving two primary signals of a same respective colour, and an adder circuit (14R ; 14V ; 14B) mixing the signals outgoing from the first and second amplifiers, said gain control signal ($\alpha$a) being applied through the analog inverting means (17R, 17V, 17B) and directly to the gain control inputs of the first and second amplifiers respectively.

12. System (1b) according to any one of claims 1 to 10, wherein said two picture signals ($I_1$, $I_2$), are each in the form of a luminance signal ($Y_1$, $Y_2$), of a first colour difference signal ($DR_1$, $DR_2$) and of a second colour difference signal ($DB_1$, $DB_2$) transmitted in parallel, characterized in that said luminance signals ($Y_1$, $Y_2$) are said derived signals ($S_1$, $S_2$) and in that the mixing means comprise three mixers (11Y ; 11DR ; 11DB) including first variable gain amplifiers ($13Y_1$, $13DR_1$, $13DB_1$) receiving respectively the luminance signal and the first and second colour difference signals corresponding to one of the colour picture signals ($I_1$), second variable gain amplifiers ($13Y_2$, $13DR_2$ $13DB_2$) respectively receiving the luminance signal and the first and second colour difference signals corresponding to the other picture signal ($I_2$) and adder circuits (14Y, 14DR, 14DB) for respectively mixing the amplified luminance signals and the first and second amplified colour difference signals, said gain control signal ($\alpha$b) being applied through the analog inverting means (17Y, 17DR, 17DB) and directly to gain control inputs of the first and second amplifiers respectively.

13. System (1c) according to any one of claims 1 to 10, wherein said two picture signals ($I_1$, $I_2$) are two video signals ($SI_1$, $SI_2$) encoded according to NTSC or PAL standard, characterized in that it comprises two low-pass filters ($F_1$, $F_2$) for filtering the encoded video signals ($SI_1$, $SI_2$) into two luminance signals forming said derived signals ($S_1 = Y_1$, $S_2 = Y_2$), and in that the mixing means comprise two variable gain amplifiers ($13_1$, $13_2$) respectively receiving the encoded video signals and an adder circuit (14) mixing signals outgoing from the amplifiers, said control signal ($\alpha$c) being applied through an analog inverter (17) and directly to gain control inputs of the two amplifiers, respectively.

14. System (1d) according to any one of claims 1 to 10, wherein said two picture signals ($I_1$, $I_2$) are two video signals ($SI_1$, $SI_2$) encoded according to SECAM standard, characterized in that it comprises two demodulators ($DM_1$, $DM_2$) for demodulating said two encoded video signals ($SI_1$, $SI_2$) into two luminance signals forming said derived signals ($S_1 = Y_1$, $S_2 = Y_2$) and into two chrominance signals ($CH_1$, $CH_2$), and in that the mixing means comprise two mixers (11Y ; 11CH) each including first and second variable gain amplifiers ($13Y_1$, $13Y_2$ ; $13CH_1$, $13CH_2$) receiving respectively the luminance signals or the chrominance signals, and an adder circuit (14Y, 14CH) mixing outgoing signals from first and second amplifiers, said gain control signal (αd) being applied through the analog inverting means (17Y, 17CH) and directly to gain control inputs of the first and second amplifiers respectively.

FIG.1A

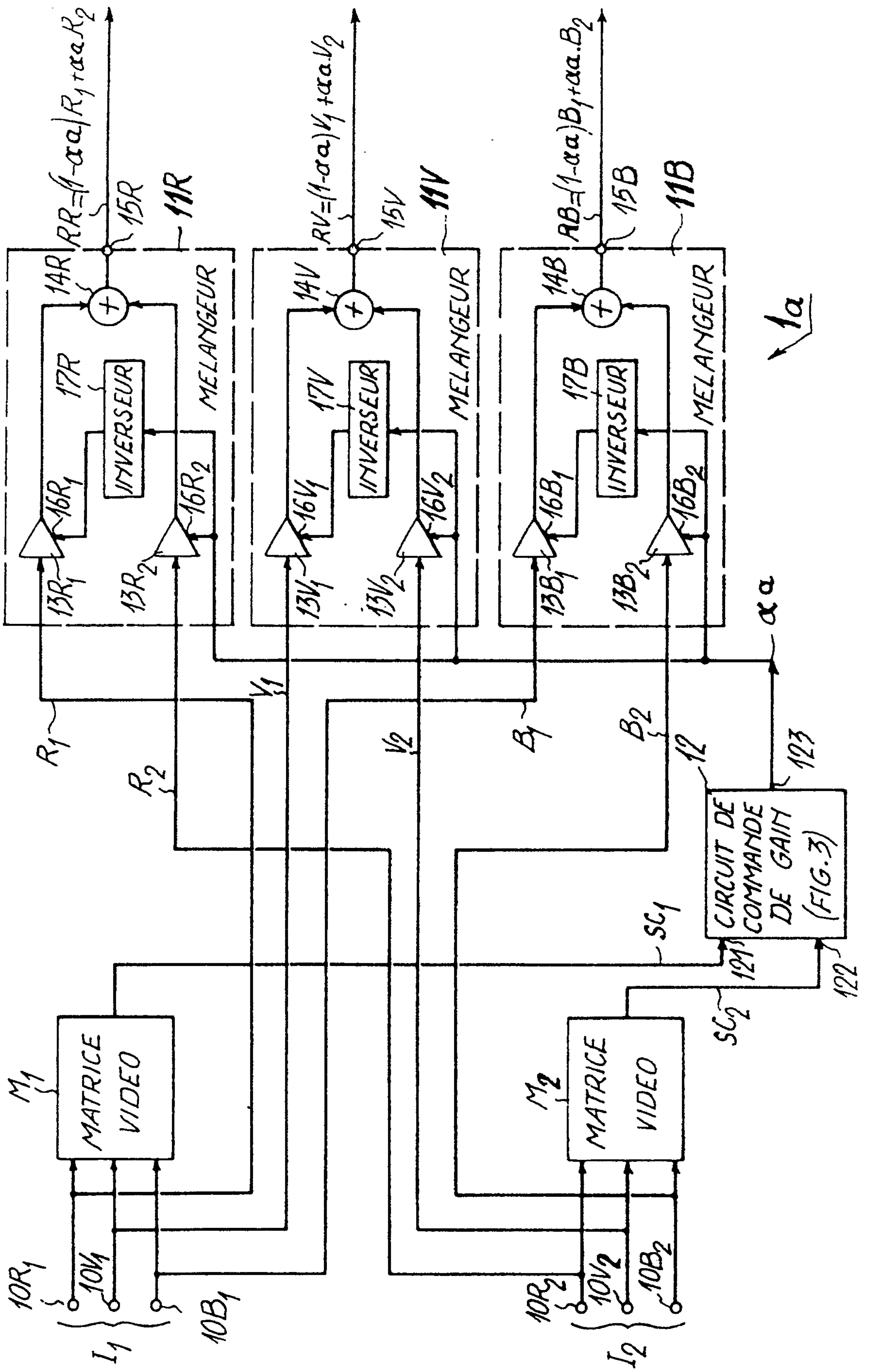
MATRICE VIDEO
MATRICE VIDEO
CIRCUIT DE COMMANDE DE GAIN (FIG.3)
INVERSEUR
INVERSEUR
INVERSEUR
MELANGEUR
MELANGEUR
MELANGEUR
RR=(1-αa)R1+αa.R2
RV=(1-αa)V1+αa.V2
RB=(1-αa)B1+αa.B2
αa
1a

FIG.1B

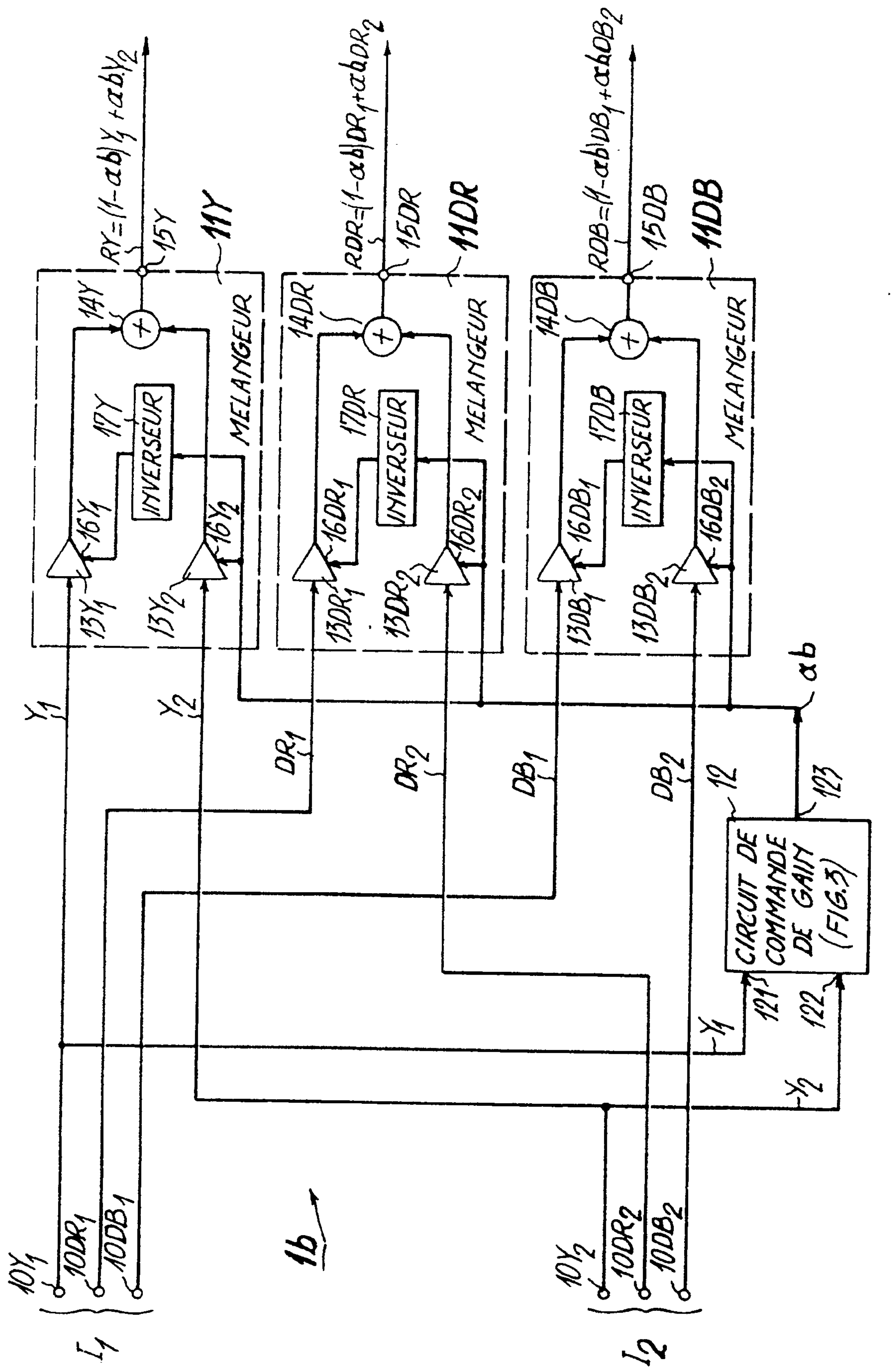
RY=(1-αb)Y1+αbY2
RDR=(1-αb)DR1+αbDR2
RDB=(1-αb)DB1+αbDB2
15Y
15DR
15DB
11Y
11DR
11DB
14Y
14DR
14DB
INVERSEUR
17Y
17DR
17DB
MELANGEUR
16Y1
16Y2
16DR1
16DR2
16DB1
16DB2
13Y1
13Y2
13DR1
13DR2
13DB1
13DB2
αb
Y1
Y2
DR1
DR2
DB1
DB2
12
123
CIRCUIT DE COMMANDE DE GAIN (FIG.3)
121
122
10Y1
10DR1
10DB1
10Y2
10DR2
10DB2
1b
I1
I2

FIG.1C

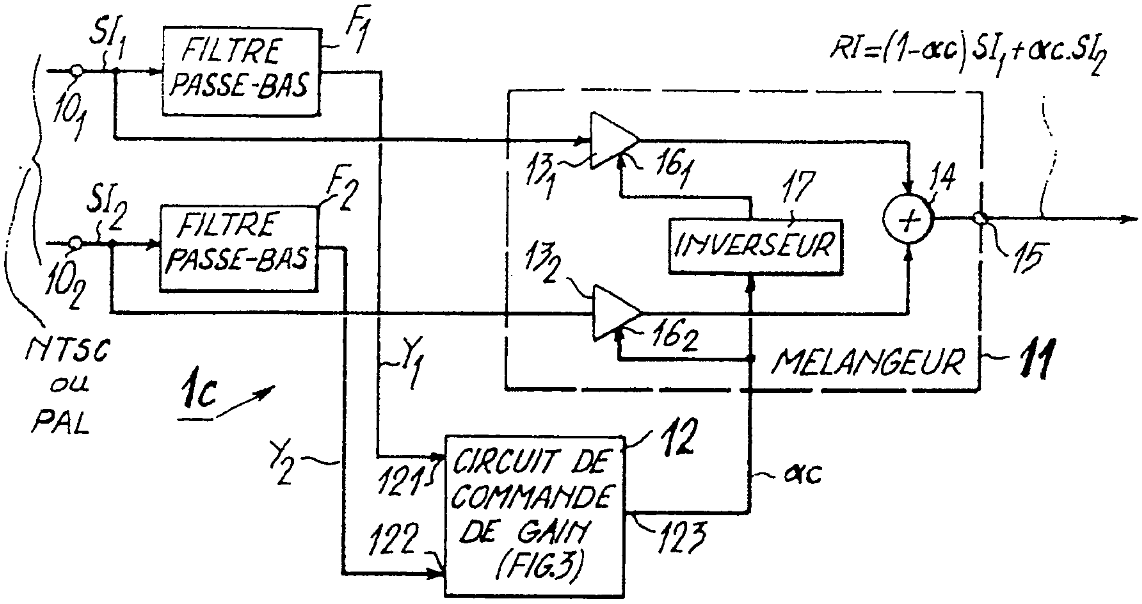
SI1
10 1
SI2
10 2
FILTRE PASSE-BAS
F1
FILTRE PASSE-BAS
F2
RI=(1-αc) SI1+αc.SI2
13 1
16 1
17
14
INVERSEUR
15
13 2
16 2
MELANGEUR
11
Y1
NTSC ou PAL
1c
Y2
121
CIRCUIT DE COMMANDE DE GAIN (FIG.3)
12
αc
122
123

FIG.1D

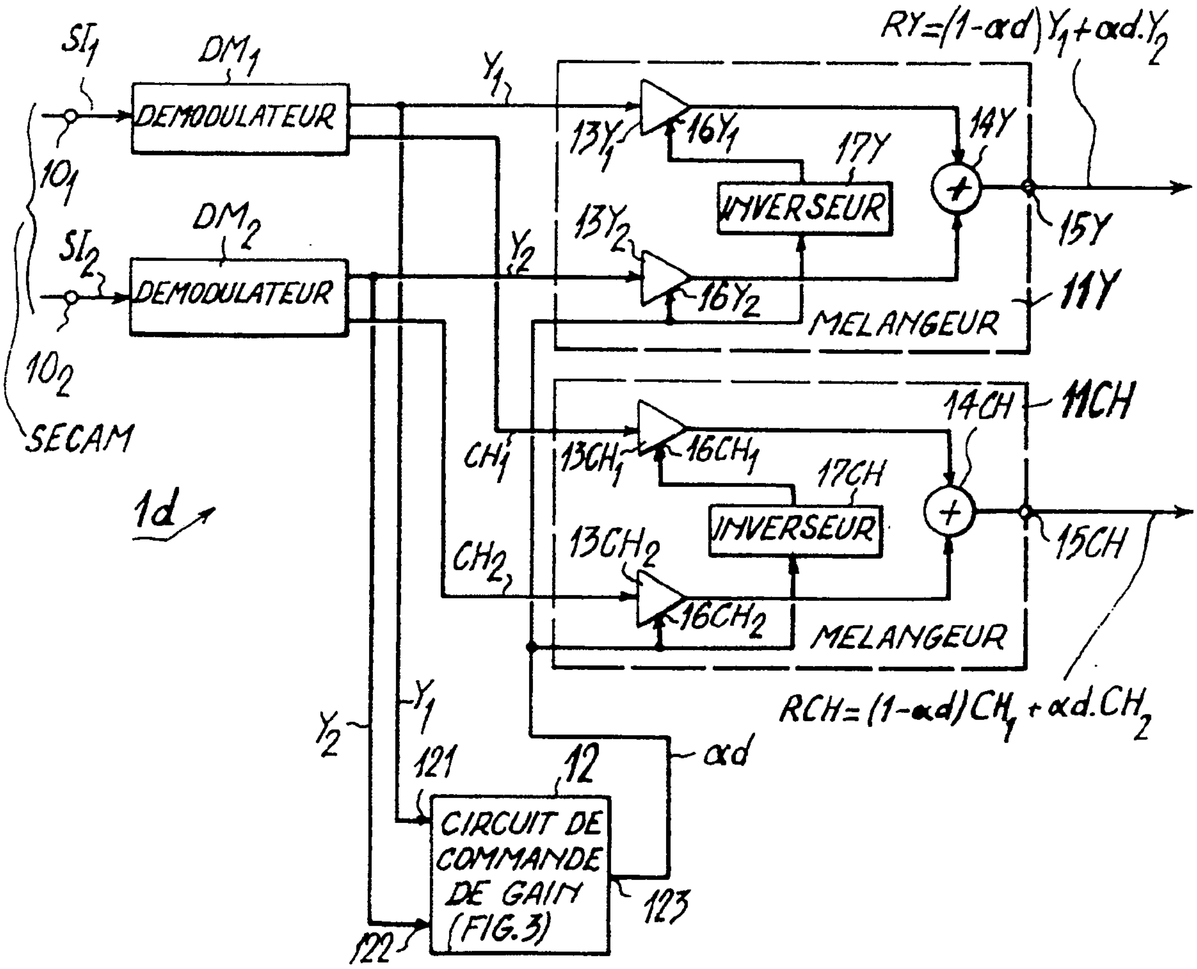
SI1
DM1
DEMODULATEUR
10 1
SI2
DM2
DEMODULATEUR
10 2
SECAM
RY=(1-αd) Y1+αd.Y2
Y1
13Y1
16Y1
17Y
14Y
INVERSEUR
15Y
Y2
13Y2
16Y2
MELANGEUR
11Y
14CH
11CH
CH1
13CH1
16CH1
17CH
INVERSEUR
15CH
1d
CH2
13CH2
16CH2
MELANGEUR
RCH=(1-αd)CH1+αd.CH2
Y1
Y2
121
12
αd
CIRCUIT DE COMMANDE DE GAIN (FIG.3)
123
122

FIG. 2

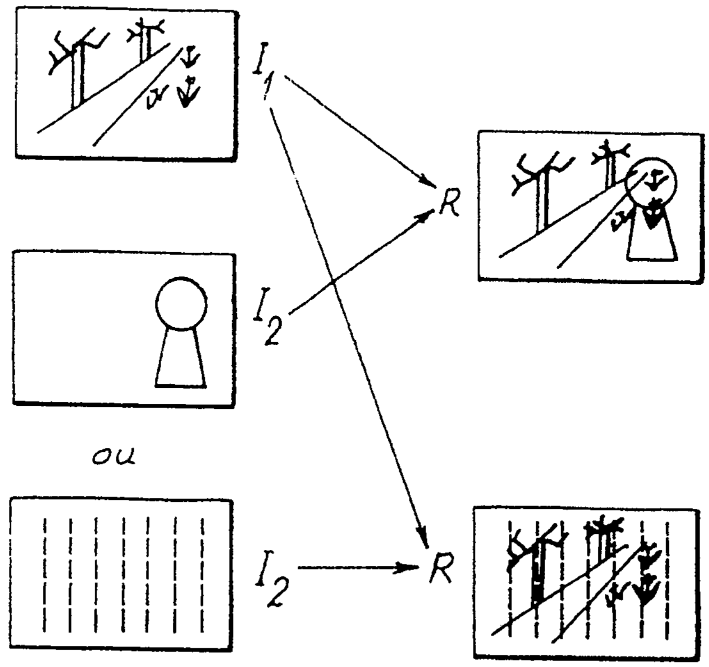


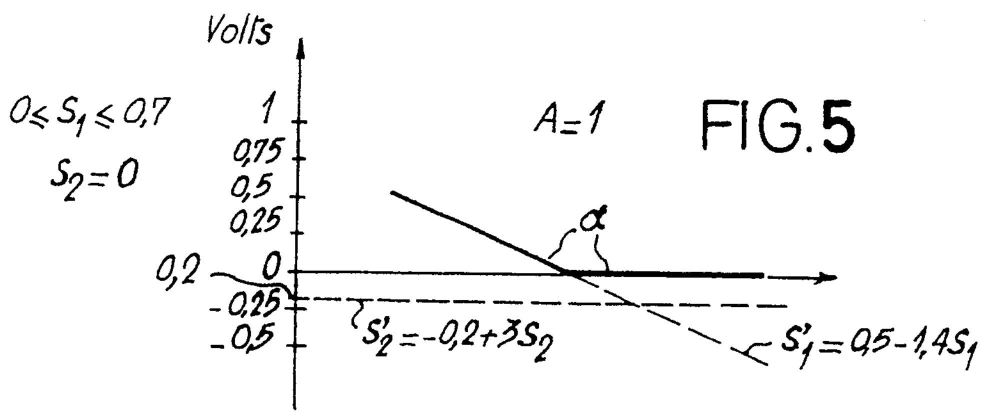


FIG. 5

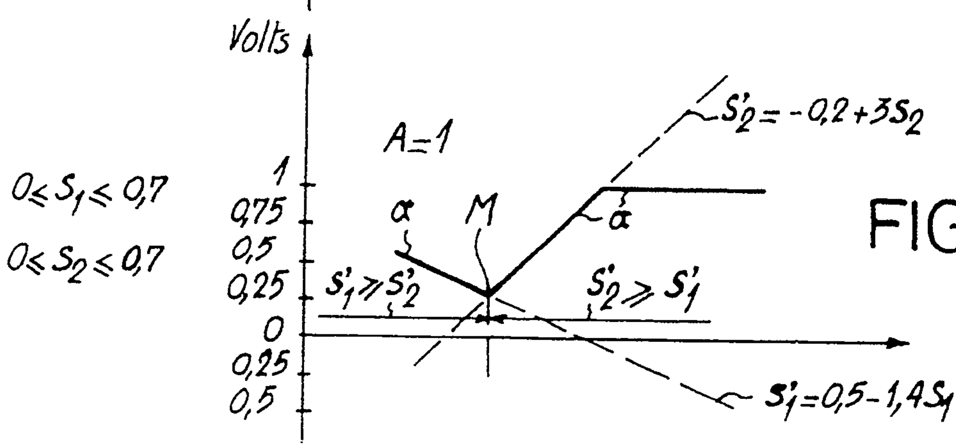


FIG. 6

FIG.3

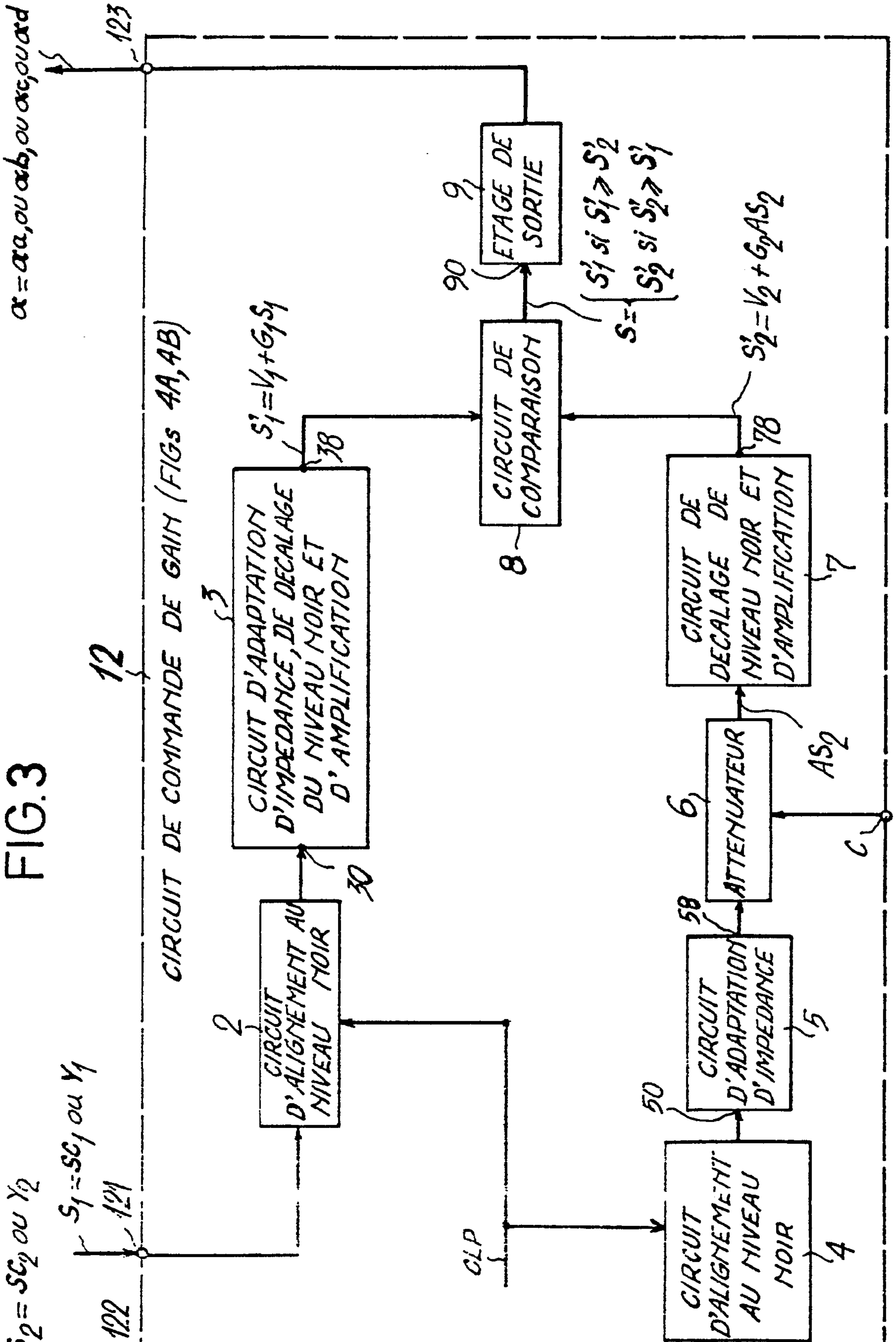
$\alpha = \alpha a$, ou $\alpha b$, ou $\alpha c$, ou $\alpha d$
123
12
CIRCUIT DE COMMANDE DE GAIN (FIGs 4A, 4B)
$S_2 = SC_2$ ou $Y_2$
122
$S_1 = SC_1$ ou $Y_1$
121
2
CIRCUIT D'ALIGNEMENT AU NIVEAU NOIR
30
3
CIRCUIT D'ADAPTATION D'IMPEDANCE, DE DECALAGE DU NIVEAU NOIR ET D'AMPLIFICATION
38
$S'_1 = V_1 + G_1 S_1$
CIRCUIT DE COMPARAISON
8
90
9
ETAGE DE SORTIE
$S = S'_1$ si $S'_1 > S'_2$
$S'_2$ si $S'_2 > S'_1$
CLP
CIRCUIT D'ALIGNEMENT AU NIVEAU NOIR
4
50
CIRCUIT D'ADAPTATION D'IMPEDANCE
5
58
ATTENUATEUR
6
C
$AS_2$
CIRCUIT DE DECALAGE DE NIVEAU NOIR ET D'AMPLIFICATION
7
78
$S'_2 = V_2 + G_2 AS_2$

FIG. 4A

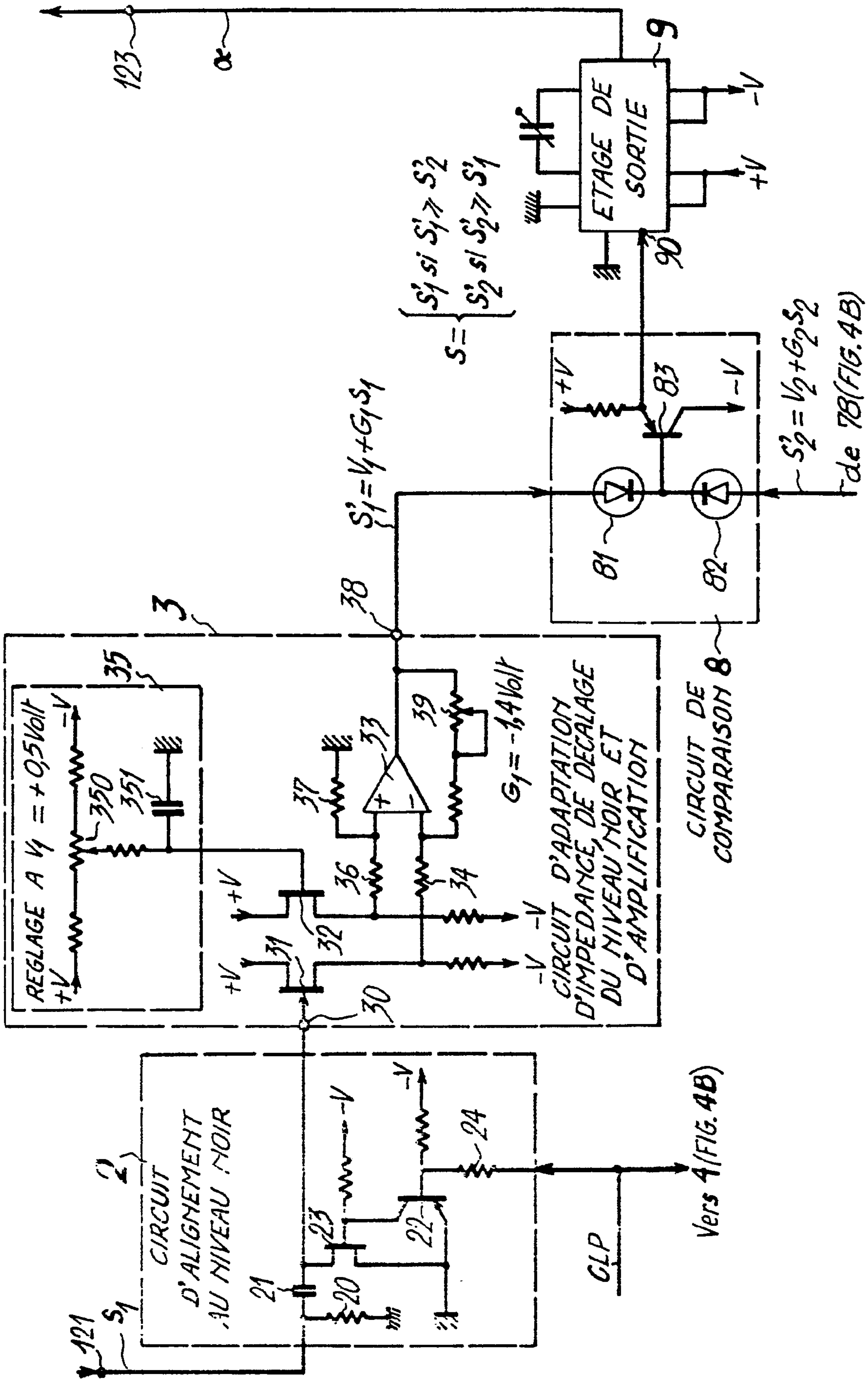
123
α
9
ETAGE DE SORTIE
-V
+V
90
S = { S'1 si S'1 > S'2 ; S'2 si S'2 > S'1
S'1 = V1 + G1S1
+V
83
-V
81
82
S'2 = V2 + G2S2
de 78 (FIG. 4B)
3
38
CIRCUIT DE COMPARAISON 8
35
REGLAGE A V1 = +0,5 Volt
+V
-V
350
351
37
33
39
G1 = -1,4 Volt
36
34
+V
31
32
30
CIRCUIT D'ADAPTATION D'IMPEDANCE, DE DECALAGE DU NIVEAU NOIR ET D'AMPLIFICATION
2
CIRCUIT D'ALIGNEMENT AU NIVEAU NOIR
121
S1
21
20
23
22
24
CLP
Vers 4 (FIG. 4B)

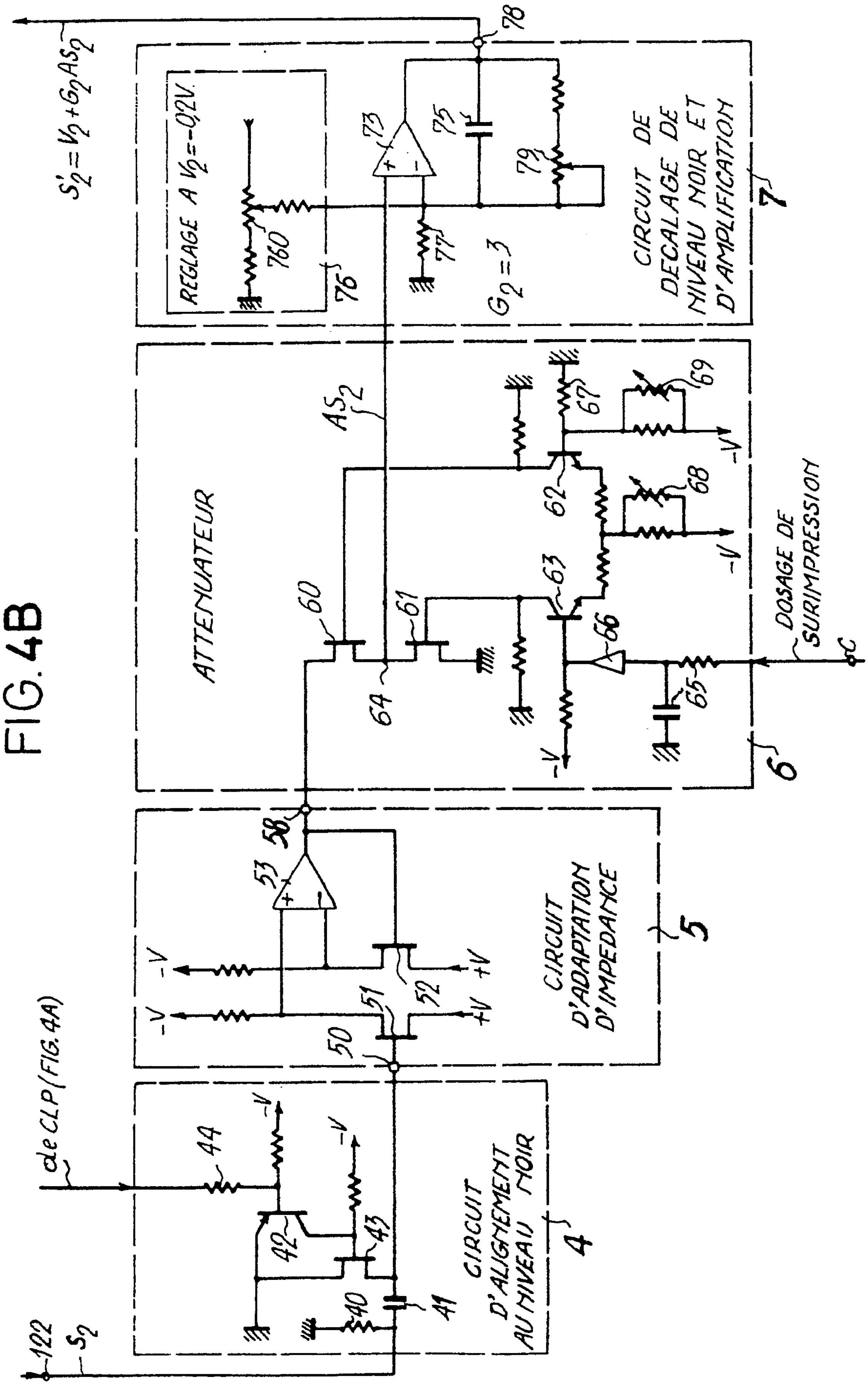

S'2 = V2 + G2 AS2
78
REGLAGE A V2 = -0,2V.
760
76
73
75
77
79
G2 = 3
CIRCUIT DE DECALAGE DE NIVEAU NOIR ET D'AMPLIFICATION
7
ATTENUATEUR
AS2
60
61
62
63
64
65
66
67
68
69
-V
DOSAGE DE SURIMPRESSION
C
6
53
58
50
51
52
+V
CIRCUIT D'ADAPTATION D'IMPEDANCE
5
de CLP (FIG. 4A)
40
41
42
43
44
CIRCUIT D'ALIGNEMENT AU NIVEAU NOIR
4
122
S2

FIG. 4B